# FASCICULE DE BREVET EUROPEEN

(11) **EP 3 254 820 B1**
(45) Date de publication et mention de la délivrance du brevet: **13.03.2019**
(21) Numéro de dépôt: 17174965.8
(22) Date de dépôt: 08.06.2017
(51) Int. Cl.: B29C 33/30, B29C 45/37, B29C 70/48, F01D 21/04

(54) **DISPOSITIF ET PROCEDE DE MOULAGE PAR INJECTION POUR LA FABRICATION D'UNE PIECE**
SPRITZGUSSVORRICHTUNG UND -VERFAHREN ZUR HERSTELLUNG EINES WERKSTÜCKS
INJECTION MOULDING DEVICE AND METHOD FOR MANUFACTURING A WORKPIECE

(30) Priorité: 09.06.2016 FR 1655303
(43) Date de publication de la demande: 13.12.2017
(73) Titulaire: Safran Aircraft Engines, 75015 Paris (FR)
(72) Inventeur: MOST, Vincent Bernard Serge, 77550 MOISSY-CRAMAYEL (FR)
(74) Mandataire: Desormiere, Pierre-Louis

(56) Documents cités:
- WO-A1-2011/131908
- WO-A1-2016/066207
- CA-A1- 2 487 738
- US-A- 5 512 221
- US-A1- 2005 264 756
- US-A1- 2016 059 500
- FOREMAN D: "PRECISION MOULDING", PROFESSIONAL ENGINEERING, DESIGN COUNCIL, GB, 1 février 1976 (1976-02-01), pages 1-07, XP001176360,

## Description

### Arrière-plan de l'invention

L'invention concerne le domaine de la fabrication de pièces moulées par injection. Plus précisément, l'invention concerne un dispositif ainsi qu'une méthode de moulage par injection pour la fabrication d'une pièce, permettant de prévenir une éventuelle déformation de la pièce survenant au cours de sa solidification (ex : polymérisation) et constatée lors de son extraction du moule vis-à-vis d'une géométrie nominale attendue.

Parmi les procédés de moulage par injection existants, on connait notamment le procédé de moulage par transfert de résine dit « RTM » (acronyme anglais de « *Resin Transfert Molding* ») dans lequel un moule comporte deux demi-coquilles qui, posées l'une sur l'autre, confinent une cavité de moulage. La préforme fibreuse est insérée dans la cavité entre les deux demi-coquilles puis est injectée avec de la résine. La polymérisation de la résine est réalisée en maintenant fermées les deux demi-coquilles. Selon la cadence de production souhaitée, la polymérisation est réalisée à température ambiante ou par chauffage. Un tel procédé peut être employé pour la réalisation de pièces :
- de révolutions, à titre d'exemple pour la fabrication de carters de soufflante de turbine à gaz de moteurs aéronautiques ;
- de pièces plates, par exemple pour la fabrication d'aubes de rotors.

L'utilisation d'un tel procédé est particulièrement avantageuse car il permet de réaliser des pièces ayant une masse globale moins élevée que ces mêmes pièces lorsqu'elles sont réalisées en matériau métallique, tout en présentant une résistance mécanique au moins équivalente sinon supérieure.

Toutefois, de telles pièces peuvent aussi être réalisées selon d'autres procédés de moulage par injection couramment connus, tel que l'injection plastique, ou encore le moulage métallique dans le cadre d'applications de fonderie.

Quel que soit le procédé de moulage mis en oeuvre, il peut être observé en sortie de moule, c'est-à-dire lors de l'extraction de la pièce fabriquée, une déformation vis-à-vis de la géométrie nominale théorique. On peut ainsi, à titre d'exemples, observer :
- pour une pièce de révolution, tel un carter de soufflante, un défaut vis-à-vis d'une géométrie circulaire souhaitée, se présentant sous la forme de l'apparition d'une ovalisation de cette pièce lors de son extraction du moule ;
- pour une pièce plate, telle une aube de rotor, un écart vis-à-vis de l'angle de vrillage attendu, par exemple une diminution de la valeur d'angle de vrillage, lors de son extraction du moule, et donc un gauchissement de l'aube.

De tels défauts peuvent notamment s'expliquer par le fait que des contraintes résiduelles s'appliquent à la pièce durant sa fabrication dans le moule (ex : gradient de polymérisation, tension d'enroulement pour une pièce en matériau composite), et sont relâchées lors de l'extraction de la pièce du moule, conduisant alors à une déformation de la pièce extraite.

Généralement, de tels défauts sont relativement constants et reproductibles avec des paramètres de fabrication identiques.

Ainsi, pour parer au problème de déformation de pièce moulée par injection, une solution courante consiste à réaliser un moule de compensation, pour lequel la géométrie de sa cavité de moulage ne correspond pas à la géométrie nominale de la pièce mais à une géométrie pour laquelle la déformation a été prise en compte, de sorte à finalement obtenir lors de l'extraction de cette pièce du moule, la géométrie nominale de la pièce.

A titre d'exemple, pour contrer l'ovalisation d'une pièce attendue circulaire lors de son extraction, un moule de compensation peut être réalisé de sorte à présenter une cavité de moulage ovalisée dans une direction perpendiculaire à une direction d'ovalisation prédéterminée lorsque cette pièce est extraite d'un moule à cavité circulaire. La pièce moulée présente donc un profil ovale dans le moule de compensation, avant de retrouver un profil circulaire, tel qu'attendu, lors de son extraction.

La réalisation ce type de moule de compensation demeure néanmoins complexe et coûteuse. A titre d'exemple, les matériaux composites employés pour la réalisation de pièces mécaniques, présentent des propriétés dépendant de nombreux facteurs (ex : tissage tridimensionnel, tension d'enroulement, paramètres d'injection et de polymérisation) ne pouvant pas toujours être maîtrisés d'un point de vue théorique par les constructeurs desdites pièces.

La détermination par le calcul de la géométrie d'un moule de compensation n'est donc pas souvent réalisable. Ainsi, en pratique la réalisation d'un moule de compensation résulte d'essais itératifs consistant à fabriquer successivement plusieurs moules intermédiaires jusqu'à déterminer empiriquement une bonne géométrie de compensation.

En l'état, la réalisation d'une telle solution s'avère non seulement coûteuse, mais aussi chronophage pour la production de pièces moulées.

Le document WO2011/131908 A1 décrit un dispositif de fabrication d'un carter de soufflante d'une turbomachine en matériau composite, dans lequel le moule comporte un corps cylindrique d'axe longitudinal et des flasques latéraux, et dans lequel le contre-moule comporte un corps cylindrique et des contre-brides latérales, les contre-brides étant destinées à être solidarisées sur les flasques, le corps du moule et le corps du contre-moule étant concentriques, la préforme étant destinée à être disposée entre le corps du moule et le corps du contre-moule, et dans lequel le matériau du corps du moule a un coefficient de dilatation sensiblement plus élevé que celui du corps du contre-moule.

### Objet et résumé de l'invention

La présente invention a pour but de remédier aux inconvénients précités. Plus précisément, la présente invention a pour but de proposer une solution qui permet de fournir un moule apte à compenser la déformation d'une pièce vis-à-vis de sa géométrie nominale, et ce sans nécessiter la réalisation de moules intermédiaires.

A cet effet, l'invention propose un dispositif de moulage par injection pour la fabrication d'une pièce de révolution comprenant
- un moule d'injection, le moule étant un moule de révolution formé d'un support et d'un contre-moule distincts définissant entre eux une cavité de moulage présentant une première géométrie circulaire ;
- au moins un moyen d'injection d'un matériau fluide dans la cavité de moulage ;
ce dispositif comprenant, en outre, des éléments de déformation configurés pour modifier la géométrie de la cavité de moulage selon une deuxième géométrie de section ovale distincte de la première géométrie.

Avantageusement, la présence d'éléments de déformation pour modifier la cavité de moulage, permet la réalisation d'un unique moule. La modification de la géométrie de la cavité de moulage permet, notamment, de compenser toute déformation éventuelle pour une pièce fabriquée et extraite de ce moule. La géométrie d'une telle cavité peut donc être contrôlée selon une infinité de configurations par lesdits éléments de déformation. Par conséquent, les coûts et temps de réalisation ou d'optimisation d'un tel moule sont minimisés, l'application d'une nouvelle configuration ne nécessitant pas la réalisation d'un nouveau moule. Ainsi, une fois une configuration optimale des éléments de déformation identifiée, cette configuration peut être conservée pour une production en série de moules, ou encore pour la réalisation d'un unique moule dont la cavité de moulage est déformée en accord avec la configuration optimale identifiée.

Selon un aspect du dispositif de moulage, les éléments de déformation comprennent des vérins reliés à au moins une paroi du moule d'injection.

Selon un autre aspect du dispositif de moulage, les éléments de déformation comprennent des vessies adjacentes à des membranes déformables, lesdites membranes délimitant le contour de la cavité de moulage.

Selon un autre aspect, le moule d'injection comprend des moyens de chauffage internes comprenant un circuit de circulation d'un fluide caloporteur.

Selon un autre aspect, le dispositif de moulage comprend un système d'asservissement configuré pour vérifier et commander l'état de chaque élément de déformation, le système d'asservissement comprenant un calculateur et une pluralité de capteurs , les capteurs étant configurés pour mesurer l'état des éléments de déformation et communiquer ces mesures au calculateur, le calculateur étant configuré pour identifier un éventuel écart des valeurs communiquées avec des valeurs préenregistrées et commander en fonction du résultat de cette comparaison les éléments de déformation.

L'invention propose également un procédé de moulage par injection pour la fabrication d'une pièce de révolution à partir d'un moule d'injection, le moule étant un moule de révolution formé d'un support et d'un contre-moule définissant entre eux une cavité de moulage, la cavité de moulage présentant une première géométrie circulaire correspondant à une géométrie finale de la pièce à fabriquer, comprenant :
- une étape d'injection d'un matériau fluide dans la cavité de moulage de manière à former la pièce ;
- une étape d'extraction de la pièce formée ;
ledit procédé comprenant en outre avant l'étape d'injection:
- une étape de détermination d'une deuxième géométrie de section ovale pour la cavité de moulage, la deuxième géométrie étant déterminée en fonction d'une déformation prédéterminée de la pièce lorsque celle-ci est extraite de la cavité de moulage présentant la première géométrie ;
- une étape de modification de la géométrie de la cavité de moulage depuis la première géométrie à la deuxième géométrie de la cavité de moulage.

Selon un aspect du procédé moulage, l'étape de modification de géométrie de la cavité est réalisée par des vérins disposés en droit de parois extérieures du moule d'injection.

Selon un aspect du procédé moulage, l'étape de modification de géométrie de la cavité est réalisée par des vessies adjacentes à des membranes déformables, lesdites membranes délimitant le contour de la cavité de moulage.

Selon un aspect du procédé moulage, la pièce est une pièce en matériau composite réalisée par
- une étape d'insertion d'une préforme fibreuse dans la cavité de moulage précédent l'étape d'injection ;
- une étape d'injection d'une résine en tant que matériau fluide ;
- une étape de chauffage de manière à faire polymériser la résine.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue de côté d'un dispositif de moulage comprenant notamment un moule d'injection pour la fabrication d'une pièce de révolution selon un mode de réalisation,
- la figure 2 est une demi-vue en coupe axiale du moule d'injection de la figure 1 selon le plan II-II indiqué sur la figure 1,
- la figure 3 est une vue en perspective d'un dispositif de moulage comprenant des éléments de déformation pour la fabrication d'une pièce de révolution selon un second mode de réalisation ;
- la figure 4 est une vue en perspective d'un dispositif de moulage comprenant des éléments de déformation pour la fabrication d'une pièce de révolution selon un autre mode de réalisation ;
- la figure 5 est une vue en section d'un dispositif de moulage comprenant des éléments de déformation pour la fabrication d'une pièce vrillée selon un autre mode de réalisation ;
- la figure 6 est une vue en perspective d'un dispositif de moulage comprenant des éléments de déformation pour la fabrication d'une pièce de révolution selon un autre mode de réalisation.

### Description détaillée de modes de réalisation

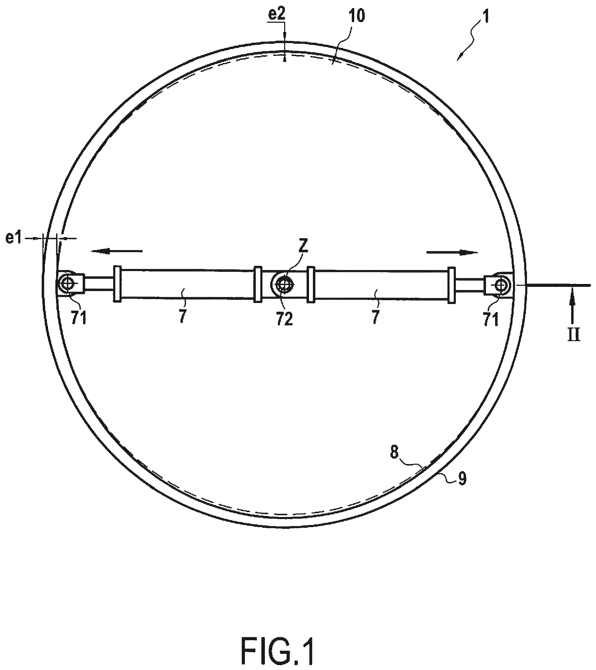

La figure 1 illustre un dispositif de moulage par injection comprenant, notamment, un moule 1 de révolution, par exemple de forme circulaire ou cylindrique, présentant une section annulaire.

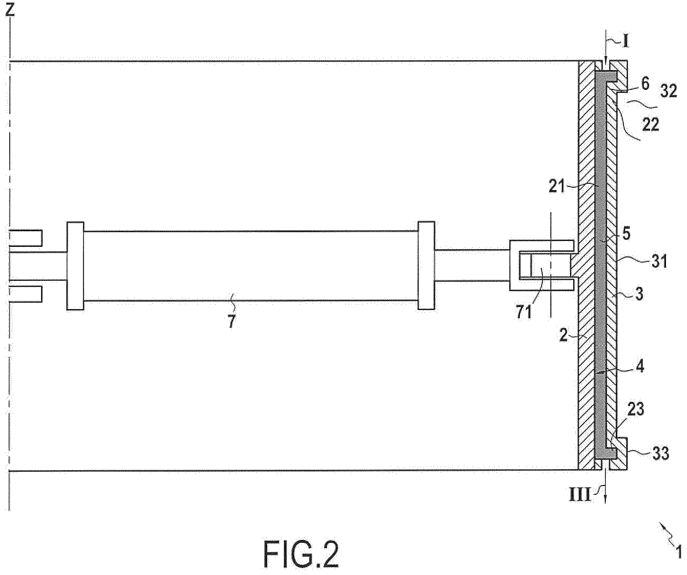

Comme il peut être vu sur la figure 2, qui est une vue en coupe axiale selon le plan II-II de la figure 1, un tel moule 1 est formé d'un support 2 et d'un contre-moule 3 définissant entre eux une cavité de moulage 4, qui présente une forme circulaire ou annulaire.

Le support 2 est destiné à servir de support à une préforme 5 fibreuse d'une pièce à réaliser. La préforme 5 est, à titre d'exemple, une préforme en fibres de carbone comprenant un tissage tridimensionnel ou multicouche entre des fils de chaîne et de trame.

Le support 2 représenté ici présente une surface annulaire externe de même profil que la pièce à réaliser, par exemple ici la surface d'un carter de soufflante.

Le contre-moule 3 est mis en place en regard du support 2 du moule 1, de sorte à constituer le volume fermé de la cavité de moulage 4.

Dans l'exemple illustré, la préforme 5 remplit la totalité du volume de la cavité de moulage 4. La préforme 5 présente, ici, une partie centrale 21 cylindrique et deux brides 22, 23 transversales destinées à former les brides d'un carter.

En conséquence, le contre-moule 3 réalisé comprend une partie centrale 31 cylindrique correspondant à la partie centrale 21 de la préforme 5, ainsi que deux flasques 32, 33 transversaux réalisés de manière à épouser les brides 21, 22 de la préforme 5.

Par ailleurs, en vue de permettre le démoulage de la pièce réalisée, le contre-moule 3 est formé d'au moins deux sous-éléments distincts pouvant être assemblés ou séparés, tels deux demi-coquilles.

Selon un autre mode de réalisation non-illustré, le support 2 peut également comprendre des flasques latéraux de part et d'autre d'une partie centrale 31 cylindrique, pour la réalisation d'une pièce comprenant des brides latérales. Le support 2 comprend alors des sous-éléments démontables afin de permettre le démoulage de la pièce obtenue.

Le dispositif de moulage par injection est, à titre d'exemple, un dispositif de moulage par transfert de résine.

Conformément aux procédés de moulage par injection existants, le dispositif de moulage comprend des moyens (non-illustrés) permettant l'injection, symbolisée sur la figure 2 par une flèche unidirectionnelle I, sous pression d'un matériau fluide dans la cavité de moulage 4 via au moins un canal d'injection 6, avec l'assistance le cas échéant d'une source de vide, symbolisée par la flèche unidirectionnelle III. Le matériau fluide injecté est, à titre d'exemple, à base de métal, céramique, ou plastique, ou encore ici une résine pour la fabrication d'une pièce en matériau composite organique.

Dans ce dernier exemple, correspondant à un moulage par transfert de résine de type « RTM », le dispositif de moulage comprend, par ailleurs, des moyens de chauffage destinés à faire polymériser la résine, la polymérisation de la résine permettant la réalisation de la pièce en matériau composite.

Ainsi, dans cet exemple, l'insertion de la préforme 5 fibreuse dans la cavité de moulage 4 du moule 1, est suivie de l'injection de la résine par les moyens d'injection dans cette cavité de moulage 4 via le canal d'injection 6. L'injection de la résine est ensuite suivie de la mise en température du moule 1, permettant le chauffage de la résine via des moyens de chauffage, généralement réalisés par une presse auto-chauffante ou une étuve, permettant la polymérisation de la résine, de sorte à obtenir en sortie de moule 1 une pièce en matériau composite à matrice organique.

Selon divers modes de réalisations, le dispositif de moulage comprend des éléments de déformation configurés pour appliquer une pression ou une traction (ex : mécanique ou fluidique), de sorte à déformer la géométrie de la cavité de moulage 4. Ainsi, les éléments de déformation permettent d'amener la cavité de moulage 4 présentant au repos, c'est-à-dire en l'absence de contrainte exercée par les éléments de déformation, une première géométrie circulaire vers une deuxième géométrie ovale contrôlée par les éléments de déformation.

Avantageusement, comme exposé plus loin, la deuxième géométrie est déterminée en fonction de la déformation observée sur une pièce, lorsque celle-ci est réalisée avec un moule 1 dont la cavité de moulage 4 présente une première géométrie nominale correspondant à la géométrie finale de la pièce que l'on souhaite fabriquer. Comme expliqué ci-avant, avec cette première géométrie, la pièce présente, après son extraction du moule 1, des déformations qui ne permettent pas à la pièce de correspondre à la première géométrie nominale. La deuxième géométrie de la cavité de moulage 4 est, par conséquent, déterminée de manière à compenser cette déformation et obtenir ainsi une pièce finale, qui une fois extraite du moule 1, présente la première géométrie nominale.

Par ailleurs, l'opération de modification de la cavité de moulage 4 par les éléments de déformation est réalisée avant l'injection du matériau fluide dans la cavité de moulage 4.

Dans le mode de réalisation illustré sur la figure 1, les éléments de déformation sont des vérins 7, dont la direction d'allongement est symbolisée sous formes de flèches, les vérins 7 étant disposés en regard d'au moins une paroi 8 ou 9 délimitant la circonférence du moule 1 de révolution. Les parois 8, 9 du moule 1 sont réalisées de manière rigide de sorte à ce que seuls les vérins 7 soient aptes à les déformer, en vue de modifier la géométrie de la cavité de moulage 4. Notamment, les parois 8, 9 sont réalisées de manière à conserver leur forme durant l'injection de la résine. Dans l'exemple illustré, les vérins 7 sont reliés via une première extrémité à une paroi 8 du moule 1 par l'intermédiaire d'oreilles de fixation 71. Plus précisément, les vérins 7 sont disposés en regard des oreilles de fixation 71, les oreilles étant solidaires de la paroi 8 délimitant la circonférence intérieure du moule 1 de révolution, c'est-à-dire la circonférence du support 2.

Les vérins 7 s'étendent, par ailleurs, de manière radiale à partir du centre 72 du moule 1. Pour ce faire, chacun des vérins 7 est, à titre d'exemple, fixé via une seconde extrémité à un même arbre de support passant par le centre 72 du moule 1. Le centre 72 du moule 1 est relié à un point d'attache fixe, permettant de conserver le centre 72 en tant que référentiel fixe du moule 1, quels que soient les efforts exercés par les vérins 7.

Avantageusement, la disposition des vérins 7 selon cette première configuration est particulièrement simple à mettre en oeuvre, par opposition à une deuxième configuration pour laquelle les vérins seraient disposés en regard d'une paroi 9 délimitant la circonférence extérieure du moule 1, c'est à dire la circonférence du contre-moule 3.

En effet, cette première configuration ne nécessite pas de fixer les vérins 7 à un bâti. Par ailleurs, le fait de disposer les vérins 7 en regard de la paroi 8 délimitant la circonférence intérieure du moule 1 ne nécessite pas de démonter ces derniers après la fabrication de chaque pièce.

A l'opposé, la deuxième configuration des vérins 7 implique de fixer chaque vérin 7 à un bâti, et de démonter les vérins 7 à chaque extraction d'une pièce fabriquée en vue de permettre le retrait des différents sous-éléments du contre-moule 3.

Cependant, il est aussi possible de disposer des vérins 7 en regard d'oreilles de fixation solidaires de la paroi 9 délimitant la circonférence extérieure du moule 1.

Les vérins 7 permettent d'exercer une pression, ou une traction, mécanique sur la surface d'au moins une paroi 8 ou 9 de sorte à déformer le moule 1, et ainsi indirectement déformer sa cavité de moulage 4. Notamment, le choix de l'agencement des hauteurs axiales des différents vérins 7 vis-à-vis du moule 1, permet de contrôler localement et avec précision la profondeur de déformation du moule 1 par rapport aux vérins 7. Par hauteurs axiales des vérins 7, on entend ici la position relative de chaque vérin 7 par rapport à un axe Z, cet axe présentant une direction orthogonale par rapport au plan radial du moule 1. L'axe Z est illustré sur les figures 1 à 4. Les vérins 7 sont, à titre d'exemple des vérins de type hydraulique, pneumatique ou électrique.

Selon divers modes de réalisation, la disposition spatiale telles les hauteurs axiales et les positions angulaires des vérins 7, ainsi que leur nombre, sont déterminés en fonction de la géométrie nominale attendue de la pièce, ainsi que d'une déformation prédéterminée vis-à-vis de la géométrie nominale attendue. La déformation prédéterminée est, à titre d'exemple, évaluée expérimentalement ou simulée pour une cavité de moulage 4 présentant la géométrie nominale de la pièce.

A titre d'exemple, si l'on détermine initialement un défaut de circularité (ovalisation) d'une pièce extraite d'un moule 1 comprenant une cavité de moulage 4 circulaire ou annulaire selon une première géométrie au repos (c'est-à-dire en l'absence de contraintes exercées par les vérins 7), il est possible selon une première configuration, de disposer un ensemble de vérins 7 selon une même et unique direction, à savoir la direction du plus petit rayon de la pièce ovalisée obtenue avec la première géométrie de cavité de moulage 4.

Cette disposition de vérins 7 est alors mise en oeuvre pour déformer le moule 1, et donc indirectement sa cavité de moulage 4 vers une deuxième géométrie de section ovale, dont le grand rayon est opposé au grand rayon de la pièce ovalisée que l'on obtiendrait avec la première géométrie de cavité de moulage 4. Cette deuxième géométrie, bien que présentant une section ovale, permet alors de contrer toute ovalisation de la pièce lors de son extraction, et ainsi obtenir en sortie de moule 1 une pièce sensiblement circulaire correspondant à la géométrie nominale souhaitée.

Pour cette première configuration, on peut, par ailleurs, modifier localement la rigidité du moule 1 en au moins une zone angulaire prédéterminée. Cette modification est réalisée, par exemple, par un amincissement 10 d'épaisseur de ladite zone angulaire prédéterminée du moule 1.

La figure 1 illustre, à titre d'exemple, pour une configuration monodirectionnelle des vérins 7, une épaisseur e2 minimale dans une zone d'amincissement 10 située à 90° par rapport à l'axe des vérins 7 pour un moule de révolution 1 représenté en trait plein. Ce moule 1 est représenté vis-à-vis d'un moule de révolution illustré en traits pointillés qui présenterait une épaisseur constante el supérieure à e2, et donc une section constante en l'absence de l'amincissement 10.

Avantageusement, la présence d'au moins un amincissement 10 permet de faciliter la déformation du moule 1 dans ladite zone angulaire prédéterminée, de sorte à obtenir en sortie de moule 1, lors de l'extraction de la pièce, la géométrie nominale de pièce souhaitée.

Ainsi, dans cette première configuration, du fait de la mise en oeuvre locale des zones d'amincissement 10, le moule 1 ne présente pas de section constante.

En pratique, les zones angulaires prédéterminées, ainsi que les profondeurs d'amincissement 10 sont déterminées par simulation numérique des différents paramètres physiques du moule 1.

La mise en oeuvre sur le moule 1 de zones angulaires amincies, s'explique notamment par le fait que la seule utilisation de vérins 7 selon une même direction pour un moule 1 à section constante, peut ne pas suffire à déformer suffisamment le moule 1 pour obtenir la deuxième géométrie, qui permet d'obtenir la pièce nominale souhaitée. En effet, à section constante de moule 1 et en l'absence de zones amincies, on constate parfois une déformation du moule 1 plus importante dans la direction des vérins 7 que dans la direction perpendiculaire aux vérins 7 (de l'ordre de 18% en pratique).

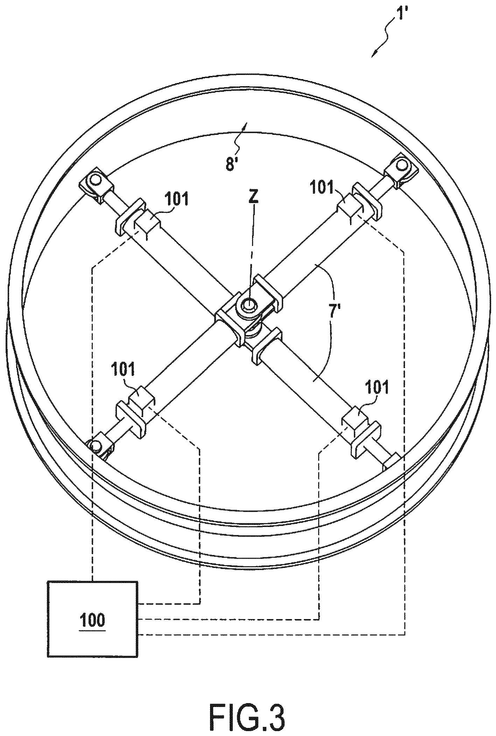

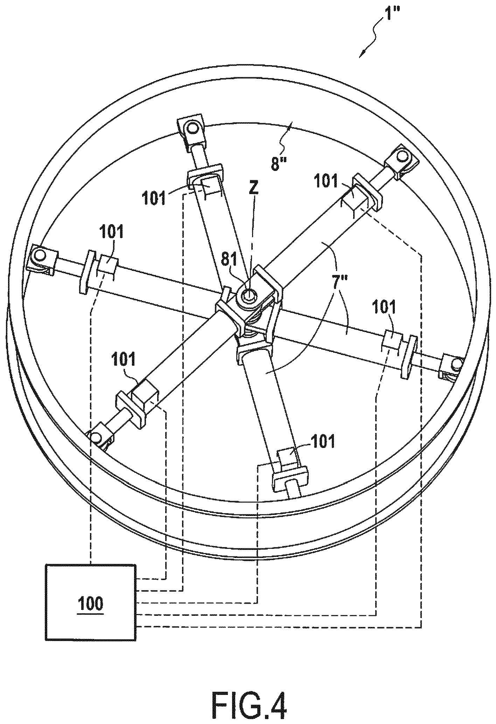

Selon diverses autres configurations de vérins 7, il est possible :
- de disposer des vérins 7' selon des directions perpendiculaires. A titre d'exemple, sur la figure 3, un ensemble de vérins 7' sont disposés perpendiculairement entre eux, et au regard d'une paroi 8' délimitant la circonférence intérieure d'un moule 1' de révolution. Avantageusement, ceci permet de contrôler la déformation ovale du moule 1' et de sa cavité de moulage avec précision, selon le grand et le petit rayon de l'ovalisation souhaitée. Une telle configuration ne nécessite, par ailleurs, pas de zone d'amincissement 10 contrairement à la configuration monodirectionnelle précédemment décrite ;
- plus généralement, de disposer des vérins 7" selon une pluralité de directions et en une pluralité de zones angulaires prédéterminées d'un moule 1". La figure 4 illustre, à titre d'exemple, une pluralité de vérins 7" disposés entre eux selon divers écarts angulaires, et au regard d'une paroi 8" délimitant la circonférence intérieure d'un moule 1" de révolution. A titre d'exemple, les vérins 7" peuvent ou non être espacés équiangulairement et/ou s'étendre de manière radiale par rapport au centre 81 du moule 1", à l'image des rayons d'une roue fixés à un moyeu central. Avantageusement, l'utilisation d'une pluralité de vérins 7" permet de contrôler localement et avec précision chaque zone angulaire du moule 1" et de sa cavité de moulage.

Ainsi, dans les exemples précédents, la fabrication d'une pièce pour tout type d'injection (ex : par métal, plastique, ou résine) comprend les étapes communes suivantes :
- détermination d'une deuxième géométrie de cavité de moulage 4 pour le moule 1, 1', 1", cette géométrie étant déterminée en fonction d'une déformation prédéterminée de la pièce lorsque celle-ci est extraite du moule 1, 1', 1" présentant une première géométrie de cavité de moulage ;
- modification de la géométrie de la cavité de moulage 4 depuis la première géométrie jusqu'à la deuxième géométrie via les éléments de déformation ;
- injection par les moyens d'injection, au travers un canal d'injection 6, d'un matériau fluide dans la cavité de moulage 4 présentant la deuxième géométrie de manière à former la pièce ;
- extraction de la pièce formée dans la cavité de moulage 4.

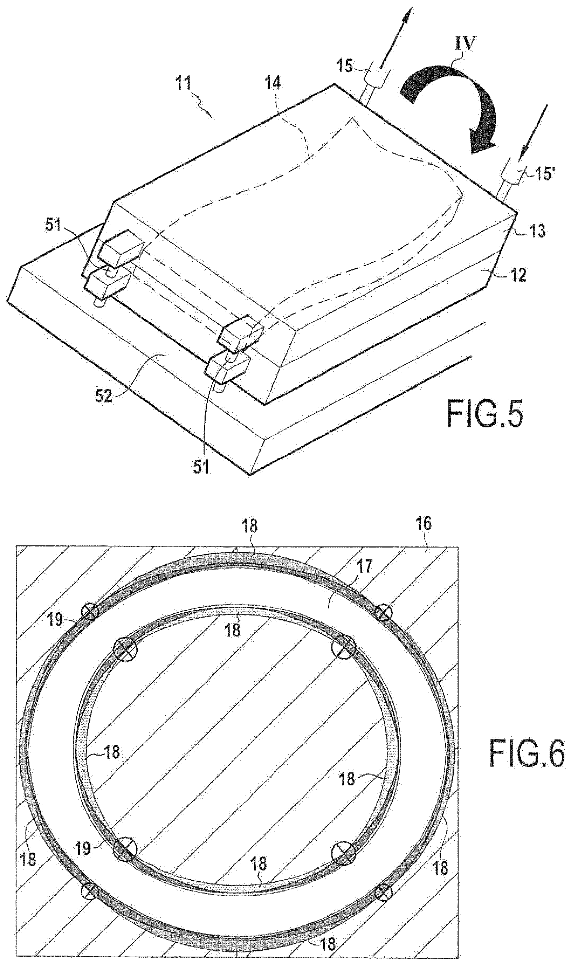

La figure 5 illustre un autre exemple mettant en oeuvre en tant qu'éléments de déformation les vérins précédemment décrits, cette fois pour la fabrication d'une pièce vrillée via un procédé de moulage par injection (ex : plastique, métal ou résine). Sur cette figure, le moule d'injection est un moule 11 sensiblement plat formé d'un support 12 et d'un contre-moule 13 définissant entre eux une cavité de moulage (non-représentée) pour la fabrication d'une pièce 14 vrillée telle une aube de rotor.

Cette pièce 14 est réalisée selon un des procédés d'injection précédemment décrit.

Dans cet exemple, Le moule 11 présente à une première extrémité au moins un moyen de fixation 51, deux dans l'exemple illustré, permettant l'immobilisation du moule 11 via un encastrement 52. A l'opposé de cette première extrémité, sont disposés un ensemble de vérins 15, 15' aptes à réaliser une torsion ou un vrillage sur une deuxième extrémité du moule 11. Préférentiellement, mais pas nécessairement, les liaisons 51 permettant l'encastrement du moule 11 sont réalisées face aux vérins 15, 15,' de manière à assurer une bonne immobilité de la première extrémité et à ne pas reproduire sur cette extrémité la torsion exercée par les vérins 15, 15' sur la deuxième extrémité.

L'action des vérins 15, 15' pour exercer une torsion ou un vrillage (flèche courbée IV) prédéterminée sur le moule 11, est ici illustrée par des flèches monodirectionnelles symbolisant la direction d'application des forces des vérins 15, 15' sur le moule 11 lors de leur déplacement. Dans cet exemple, deux vérins 15 et 15' appliquent chacun une force colinéaire et de direction opposée pour réaliser une torsion ou un vrillage à la deuxième extrémité du moule 11. Ce nombre de vérins 15, 15' n'est cependant donné qu'à titre illustratif, et une telle torsion ou vrillage n'est, par ailleurs, pas nécessairement réalisée par l'application de forces opposées.

En l'absence de torsion ou de vrillage exercé par les vérins 15, 15' sur la deuxième extrémité du moule 11, le moule 11 présente au repos une cavité de moulage selon une première géométrie, cette géométrie correspondant à la géométrie nominale attendue de la pièce à fabriquer.

Dans le cas de la fabrication d'une pièce 14 plate vrillée telle une pale de rotor, l'extraction de la pièce fabriquée à partir de la première géométrie de cavité de moulage conduit en pratique, du fait du relâchement des contraintes, à un écart vis-à-vis de l'angle de vrillage attendu.

Afin de compenser un tel écart, dans un mode de réalisation, les vérins 15, 15' appliquent alors, avant l'injection du matériau fluide dans la cavité de moulage, une torsion prédéterminée à la deuxième extrémité du moule 11 de sorte à déformer la cavité de moulage vers une deuxième géométrie.

La deuxième géométrie, à titre d'exemple, augmente alors l'angle de vrillage de la pièce 14 dans la cavité de moulage vis-à-vis de l'angle nominal attendu de cette pièce 14.

Ainsi, après fabrication de la pièce selon la deuxième géométrie dans la cavité de moulage, l'extraction de la pièce 14 de cette cavité de moulage conduit à un relâchement des contraintes physiques s'appliquant sur cette pièce 14, se traduisant par une diminution de la valeur de son angle de vrillage qui converge finalement vers l'angle de vrillage nominal attendu.

On comprend donc ici que du fait de la torsion exercée par les vérins 15, la pièce 14 à fabriquer adopte dans la cavité de moulage la deuxième géométrie prédéterminée, puis converge lors de son extraction vers la première géométrie, c'est-à-dire vers la géométrie nominale attendue.

Par ailleurs, pour les différentes configurations de vérins 7, 7', 7", 15, 15' précédemment décrites, lorsque la pièce moulée est fabriquée à partir d'un procédé par transfert de résine, les moyens de chauffage du moule 1, 1', 1", 11 peuvent être réalisés par le moule lui-même, qui est alors auto-chauffant. A titre d'exemple, la propriété auto-chauffante du moule est réalisée par la mise en oeuvre au sein du moule d'un circuit interne permettant la circulation d'un fluide caloporteur. Avantageusement, contrairement à un moule standard couramment placé dans une étuve pour son chauffage, la réalisation d'un moule 1, 1', 1", 11 auto-chauffant permet alors d'éviter tout chauffage des vérins 7, 7', 7", 15, 15', risquant de dilater ces derniers et compliquer la commande de leur déplacement.

La figure 6 illustre un autre mode de réalisation des éléments de déformation pour un moule 16. Le moule 16 illustré ici est, à titre d'exemple, un moule 16 de révolution présentant une cavité de moulage 17 circulaire.

Dans ce mode de réalisation, les éléments de déformation sont réalisés par un nombre prédéterminé de vessies 18 adjacentes de membranes 19 déformables délimitant le contour de la cavité de moulage 17. Chaque vessie 18 peut être indépendamment parcourue par un fluide sous pression, permettant de contrôler la dilatation de celle-ci et donc l'application d'une pression fluidique sur la membrane 19 adjacente.

Ainsi, le contrôle de la dilatation de chaque vessie 18 permet de contrôler localement, c'est-à-dire en au moins une zone angulaire prédéterminée, la déformation de sa membrane 19 adjacente, et donc la déformation de la cavité de moulage 17.

Dans l'exemple illustré, chaque membrane 19 comporte une zone angulaire fixe, c'est-à-dire d'épaisseur non-déformable, délimitant la séparation de chaque vessie 18. Cette délimitation est symbolisée par des croix sur cette figure. Ainsi, dans cet exemple, chaque membrane 19 peut être respectivement déformée par quatre vessies 18.

Dans ce mode de réalisation, tout comme précédemment, si l'on détermine initialement un défaut de circularité, telle une ovalisation, d'une pièce extraite du moule 16 comprenant une cavité de moulage 17 selon une première géométrie au repos (c'est-à-dire en l'absence de contraintes exercées par les vessies 18), il est possible, de contrôler les vessies 18 de sorte à déformer la cavité de moulage 17 vers une deuxième géométrie de section ovale, dont le grand rayon est opposé au grand rayon de la pièce ovalisée que l'on obtiendrait avec la première géométrie de cavité de moulage 17. Cette deuxième géométrie, bien que présentant une section ovale, permet une fois encore de compenser toute ovalisation de la pièce lors de son extraction, et ainsi obtenir en sortie de moule 16 une pièce sensiblement circulaire correspondant à la géométrie nominale souhaitée.

Dans l'exemple représenté, on observe une ovalisation de la cavité de moulage 17 réalisée à partir de quatre vessies 18 respectivement adjacentes à deux membranes 19, ces membranes 19 délimitant respectivement la circonférence intérieure et la circonférence extérieure de la cavité de moulage 17. Il est cependant possible d'adapter le nombre de vessies 18, on comprend en effet qu'un nombre plus important de vessies 18 permet d'améliorer la précision de déformation qui s'exerce localement sur chacune des membranes 19.

Dans un autre mode de réalisation non-illustré, les membranes 19 déformables délimitent le contour de la cavité de moulage 17, mais ne sont pas associées à des vessies adjacentes. La circulation d'un fluide sous pression, par exemple de l'air sous pression, entre des parois délimitant les contours du moule et les membranes 19 déformables permet alors de contrôler la déformation de chaque membrane 19 déformable, et donc la déformation de la cavité de moulage 17.

Par ailleurs, en référence aux différents modes de réalisation précédemment décrits, en vue de pouvoir contrôler de manière indépendante chaque élément de déformation, le dispositif de moulage comprend un système d'asservissement configuré pour vérifier et commander l'état de chaque élément de déformation, par exemple l'extension de chaque vérin 7, 7', 7", 15, 15', ou la dilatation de chaque vessie 18.
Lorsque les éléments de déformation sont des vérins 7, 7', 7", 15, 15', le système d'asservissement peut, par exemple, être réalisé par un calculateur 100 communiquant (traits pointillés sur les figures 3 et 4) avec une pluralité de capteurs de positions 101 déployés sur les vérins, et aussi éventuellement déployés en plusieurs positions angulaires prédéterminées du moule 1, 1', 1", 11.

Les capteurs de position 101 peuvent, par exemple, être de type codeurs linéaires et être déployés sur chaque vérin 7, 7', 7", 15, 15' de sorte à mesurer leur valeur d'extension respective. Avantageusement, la mesure de la valeur d'extension de chaque vérin permet au calculateur 100 de déduire indirectement, par exemple à partir d'une table de mesures, une déformation du moule au regard dudit vérin correspondant.

Les mesures sont retournées, par exemple périodiquement, au calculateur 100 qui compare alors chaque valeur retournée avec une valeur de consigne d'un modèle préenregistré. Les mesures retournées se rapportent donc à des extensions réelles mesurées de vérins 7, 7', 7", 15, 15' comparées avec des valeurs de consignes d'une table de mesure, se rapportant à des extensions théoriques pour obtenir une géométrie de cavité de moulage prédéterminée souhaitée. En cas d'écart éventuel de d'extension d'un vérin observé vis-à-vis de son extension théorique, le calculateur 100 pilote (extension ou retrait) alors ce vérin de sorte à le faire converger depuis son extension courante vers son extension théorique optimale.

Par ailleurs, il est aussi possible de placer des capteurs de position 101 directement en différentes position angulaires du moule 1, 1', 1", 11 en vue de mesurer directement sa déformation, et évaluer indirectement la géométrie de la cavité de moulage. Une fois encore, ces mesures sont communiquées au calculateur 100, qui les compare avec des valeurs de consigne d'un modèle préenregistré se rapportant à une géométrie de cavité de moulage prédéterminée, puis en fonction du résultat de cette comparaison pilote éventuellement un ou plusieurs vérins 7, 7', 7", 15, 15' de sorte converger vers une géométrie de cavité de moulage souhaitée.

Dans un autre exemple, si les éléments de déformation sont des vessies 18, les capteurs de position 101 peuvent alors être des capteurs de flux mesurant le débit de fluide circulant au travers de chaque vessie 18. Avantageusement, ceci permet au calculateur 100 d'évaluer indirectement l'état de dilatation de chaque vessie 18. Les mesures de flux des différents capteurs de position 101 sont remontées, par exemple périodiquement, au calculateur 100 qui les compare avec des valeurs de consignes de débits d'un modèle préenregistré relatif à une géométrie de cavité de moulage 17 prédéterminée souhaitée. En fonction d'un écart éventuel de valeurs résultant de cette étape de comparaison, le calculateur 100 adapte alors la circulation du fluide sous pression circulant dans une ou plusieurs vessies 18, de sorte à contrôler la déformation de la cavité de moulage 17 et faire converger la géométrie de celle-ci vers la géométrie souhaitée.

Avantageusement, les modes de réalisation décrits ci-dessus s'appliquent de manière générale à toute géométrie de pièce obtenue à l'aide d'un procédé de moulage par injection, telles des pièces sensiblement plates ou de révolutions. Ces modes de réalisations s'appliquent, à titre d'exemples non-limitatifs, à la fabrication d'un carter de soufflante ou d'une pale de turbomachine.

## Revendications

1. Dispositif de moulage par injection pour la fabrication d'une pièce de révolution comprenant
- un moule (1, 1', 1", 16) d'injection, le moule étant un moule de révolution formé d'un support (2, 12) et d'un contre-moule (3, 13) distincts définissant entre eux une cavité de moulage (4, 17) présentant une première géométrie circulaire ;
- au moins un moyen d'injection d'un matériau fluide dans la cavité de moulage;
**caractérisé en ce qu'**il comprend des éléments de déformation configurés pour modifier la géométrie de la cavité de moulage selon une deuxième géométrie de section ovale distincte de la première géométrie.

2. Dispositif de moulage selon la revendication 1, dans lequel les éléments de déformation comprennent des vérins (7, 7', 7") reliés à au moins une paroi du moule d'injection.

3. Dispositif de moulage selon la revendication 1, dans lequel les éléments de déformation comprennent des vessies (18) adjacentes à des membranes (19) déformables, lesdites membranes délimitant le contour de la cavité de moulage.

4. Dispositif de moulage selon l'une quelconque des revendications 1 à 3, dans lequel le moule d'injection comprend des moyens de chauffage internes au moule d'injection comprenant un circuit de circulation d'un fluide caloporteur.

5. Dispositif selon l'une quelconque des revendications précédentes comprenant un système d'asservissement configuré pour vérifier et commander l'état de chaque élément de déformation, le système d'asservissement comprenant un calculateur et une pluralité de capteurs , les capteurs étant configurés pour mesurer l'état des éléments de déformation et communiquer ces mesures au calculateur, le calculateur étant configuré pour identifier un éventuel écart des valeurs communiquées avec des valeurs préenregistrées et commander en fonction du résultat de cette comparaison les éléments de déformation.

6. Procédé de moulage par injection pour la fabrication d'une pièce de révolution à partir d'un moule d'injection (1, 1', 1", 16), le moule étant un moule de révolution formé d'un support (2, 12) et d'un contre-moule (3, 13) définissant entre eux une cavité de moulage, la cavité de moulage (4, 17) présentant une première géométrie circulaire correspondant à une géométrie finale de la pièce à fabriquer, comprenant :
- une étape d'injection d'un matériau fluide dans la cavité de moulage de manière à former la pièce ;
- une étape d'extraction de la pièce formée ;
ledit procédé étant **caractérisé en ce qu'**il comprend en outre avant l'étape d'injection:
- une étape de détermination d'une deuxième géométrie de section ovale pour la cavité de moulage, la deuxième géométrie étant déterminée en fonction d'une déformation prédéterminée de la pièce lorsque celle-ci est extraite de la cavité de moulage présentant la première géométrie ;
- une étape de modification de la géométrie de la cavité de moulage depuis la première géométrie à la deuxième géométrie de la cavité de moulage.

7. Procédé de moulage par injection selon la revendication 6, dans lequel l'étape de modification de géométrie de la cavité est réalisée par des vérins (7, 7', 7") reliés à au moins une paroi du moule d'injection.

8. Procédé de moulage par injection selon la revendication 6, dans lequel l'étape de modification de géométrie de la cavité de moulage est réalisée par des vessies (18) adjacentes à des membranes (19) déformables, lesdites membranes délimitant le contour de la cavité de moulage.

9. Procédé selon l'une quelconque des revendications 6 à 8, dans lequel la pièce est une pièce en matériau composite réalisée par
- une étape d'insertion d'une préforme (5) fibreuse dans la cavité de moulage précédent l'étape d'injection ;
- une étape d'injection d'une résine en tant que matériau fluide ;
- une étape de chauffage de manière à faire polymériser la résine.

## Patentansprüche

1. Spritzgießvorrichtung zur Herstellung eines Rotationsteils, umfassend
- eine Spritzgussform (1, 1', 1", 16), wobei die Form eine Rotationsform ist, die von einem Halter (2, 12) und von einer Gegenform (3, 13), welche getrennt sind und zwischen sich einen Formhohlraum (4, 17) mit einer ersten kreisförmigen Geometrie definieren, gebildet ist,
- wenigstens ein Mittel zum Einspritzen eines fließenden Materials in den Formhohlraum,
**dadurch gekennzeichnet, dass** sie Verformungselemente umfasst, die dazu ausgelegt sind, die Geometrie des Formhohlraums entsprechend einer von der ersten Geometrie verschiedenen zweiten Geometrie mit ovalem Querschnitt zu ändern.

2. Formvorrichtung nach Anspruch 1, bei der die Verformungselemente Zylinder (7, 7', 7") umfassen, die mit wenigstens einer Wand der Spritzgussform verbunden sind.

3. Formvorrichtung nach Anspruch 1, bei der die Verformungselemente Blasen (18) umfassen, die an verformbare Membranen (19) angrenzen, wobei die Membranen die Kontur des Formhohlraums begrenzen.

4. Formvorrichtung nach einem der Ansprüche 1 bis 3, wobei die Spritzgussform innerhalb der Spritzgussform angeordnete Heizmittel umfasst, die einen Kreis zum Zirkulieren eines Wärmeübertragungsfluids umfassen.

5. Vorrichtung nach einem der vorhergehenden Ansprüche, umfassend ein Regelsystem, das dazu ausgelegt ist, den Zustand eines jeden Verformungselements zu überprüfen und zu steuern, wobei das Regelsystem einen Rechner und eine Vielzahl von Sensoren aufweist, wobei die Sensoren dazu ausgelegt sind, den Zustand der Verformungselemente zu messen und diese Messungen an den Rechner zu übermitteln, wobei der Rechner dazu ausgelegt ist, eine mögliche Abweichung der übermittelten Werte von zuvor gespeicherten Werten zu erkennen und die Verformungselemente in Abhängigkeit von dem Ergebnis dieses Vergleichs zu steuern.

6. Spritzgießverfahren für die Herstellung eines Rotationsteils mit Hilfe einer Spritzgussform (1, 1', 1", 16), wobei die Form eine Rotationsform ist, die von einem Halter (2, 12) und von einer Gegenform (3, 13), die zwischen sich einen Formhohlraum definieren, gebildet ist, wobei der Formhohlraum (4, 17) eine erste kreisförmige Geometrie aufweist, die einer endgültigen Geometrie des herzustellenden Teils entspricht, umfassend:
- einen Schritt zum Einspritzen eines fließenden Materials in den Formhohlraum, um das Teil zu bilden,
- einen Schritt zum Herausnehmen des geformten Teils,
wobei das Verfahren **dadurch gekennzeichnet ist, dass** es ferner vor dem Schritt des Einspritzens umfasst:
- einen Schritt zum Bestimmen einer zweiten Geometrie mit ovalem Querschnitt für den Formhohlraum, wobei die zweite Geometrie in Abhängigkeit von einer vorbestimmten Verformung des Teils bestimmt wird, wenn dieses aus dem Formhohlraum, welcher die erste Geometrie aufweist, herausgenommen wird,
- einen Schritt zum Ändern der Geometrie des Formhohlraums von der ersten Geometrie in die zweite Geometrie des Formhohlraums.

7. Spritzgießverfahren nach Anspruch 6, bei dem der Schritt des Änderns der Geometrie des Hohlraums durch Zylinder (7, 7', 7") durchgeführt wird, die mit wenigstens einer Wand der Spritzgussform verbunden sind.

8. Spritzgießverfahren nach Anspruch 6, bei dem der Schritt der Geometrieänderung des Formhohlraums mittels Blasen (18) durchgeführt wird, die an verformbare Membranen (19) angrenzen, wobei die Membranen die Kontur des Formhohlraums begrenzen.

9. Verfahren nach einem der Ansprüche 6 bis 8, bei dem das Teil ein Teil aus Verbundwerkstoff ist, das hergestellt wird durch
- einen Schritt zum Einsetzen eines Faservorformlings (5) in den Formhohlraum, welcher dem Einspritzschritt vorausgeht,
- einen Schritt zum Einspritzen eines Harzes als fließendes Material,
- einen Erwärmungsschritt, um das Harz zu polymerisieren.

## Claims

1. An injection molding device for fabricating a part that is a body of revolution, the device comprising:
- an injection mold (1, 1', 1", 16), the mold being a body of revolution constituted by a support (2, 12) and a countermold (3, 13) that are distinct and that define between them a mold cavity (4, 17) presenting a first shape that is circular; and
- at least one injection means for injecting a fluid material into the mold cavity;
the device being **characterized in that** it includes deformation elements configured to modify the shape of the mold cavity to a second shape that is of oval section and different from the first shape.

2. A molding device according to claim 1, wherein the deformation elements comprise actuators (7, 7', 7") connected to at least one wall of the injection mold.

3. A molding device according to claim 1, wherein the deformation elements comprise bladders (18) adjacent to deformable diaphragms (19), said diaphragms defining the outline of the mold cavity.

4. A molding device according to anyone of claims 1 to 3, wherein the injection mold includes heater means internal to the injection mold comprising a circuit for passing a flow of a heat transfer fluid.

5. A device according to any preceding claim, including a servo-control system configured to verify and control the state of each deformation element, the servo-control system comprising a computer and a plurality of sensors, the sensors being configured to measure the states of the deformation elements and to communicate these measurements to the computer, the computer being configured to identify any departure of the communicated values from prerecorded values and to control the deformation elements as a function of the results of these comparisons.

6. An injection molding method for fabricating a part that is a body of revolution by using an injection mold (1, 1', 1", 16), the mold being a body of revolution formed by a support (2, 12) and a countermold (3, 13) defining between them a mold cavity, the mold cavity (4, 17) presenting a circular first shape that corresponds to a final shape for the part that is to be fabricated, the method comprising:
- a step of injecting a fluid material into the mold cavity so as to form the part; and
- a step of extracting the formed part;
said method being **characterized in that** it further comprises, before the injection step:
- a step of determining a second shape of oval section for the mold cavity, the second shape being determined as a function of a predetermined deformation of the part when it is extracted from the mold cavity presenting the first shape; and
- a step of modifying the shape of the mold cavity from the first shape to the second shape of the mold cavity.

7. An injection molding method according to claim 6, wherein the step of modifying the shape of the cavity is performed by actuators (7, 7', 7") connected to at least one wall of the injection mold.

8. An injection molding method according to claim 6, wherein the step of modifying the shape of the mold cavity is performed by bladders (18) adjacent to deformable diaphragms (19), said diaphragms defining the outline of the mold cavity.

9. A method according to anyone of claims 6 to 8, wherein the part is a part made of composite material obtained by:
- a step of inserting a fiber preform (5) into the mold cavity prior to the injection step;
- a step of injecting a resin as the fluid material; and
- a heating step so as to cause the resin to polymerize.
